# EUROPEAN PATENT APPLICATION

(11) **EP 1 646 195 A1**
(43) Date of publication of application: **12.04.2006**
(21) Application number: 04104890.1
(22) Date of filing: 06.10.2004
(51) Int. Cl.: H04L 27/30

(54) **Phase coding in wireless communications system**

(71) Applicant: Koninklijke Philips Electronics N.V., 5621 BA Eindhoven (NL)
(72) Inventor: The designation of the inventor has not yet been filed
(74) Representative: Verdonk, Peter Lambert F. M.

(57) **Abstract**

In a wireless communications system, such as a multiband Ultra Wideband communications system, data is transmitted by means of the phases of pulses in multiple frequency bands. One frequency band is designated as a reference frequency band, and data is encoded in the phase difference between pulses in the other frequency bands and pulses in the reference frequency band.

## Description

This invention relates to wireless communications, and in particular to a method for encoding data in a wireless communications system. More particularly, the invention relates to a system and a method for encoding data, for use in an Ultra Wideband (UWB) wireless communications system.

The term Ultra Wideband is used to refer to a number of different wireless communications systems. In one form of Ultra Wideband (UWB) communications system, a transmitter encodes data to generate a series of pulses, which are transmitted at radio frequencies. The function of the receiver is then to detect these pulses, in order to be able to extract the data from the transmitted signal.

In one particular proposed form of UWB communications system, the available bandwidth is divided into multiple bands, and data symbols are divided into multiple pulses, with the pulses making up a symbol being transmitted in different bands. The data is transmitted by encoding the data onto the phase, or polarity, of a carrier signal within each of the multiple bands. Thus, within each of the frequency bands, a pulse transmitted with a first phase, or polarity, represents a first binary value, while a pulse transmitted with a second phase, or polarity, represents a second binary value.

The document "General Atomics - PHY proposal", N. Askar, IEEE 802.15-03/105r0 outlines a system of this type.

Within the receiver in such a system, therefore, it is necessary to detect the phase of the received pulses, within each of the frequency bands, in order to be able to determine the data which is being transmitted in that band. One problem which arises with this is that it is necessary to have extremely stable, and identical, reference frequency generators in the transmitter and the receiver. In practice, it is extremely difficult to achieve this, however.

According to a first aspect of the present invention, there is provided a communications system, in which data is transmitted by means of the phases of pulses in multiple frequency bands, relative to the phase of a signal transmitted in another of the frequency bands.

In one embodiment of the invention, one of the frequency bands therefore acts as a reference band, and the data to be transmitted determines the relationship between the phases of the pulses transmitted in the other frequency bands with the phase of the pulses in the reference band.

The designated reference band may remain constant, or may change over time. More than one reference band may be designated.

The phase of a received pulse in one of the other frequency bands, relative to the phase of the pulse in the reference band, can then be used in the receiver to detect the transmitted data.

According to a second aspect of the invention, there is provided a method of transmitting and receiving data in a multiband wireless communications system, the method comprising: in at least one reference frequency band, transmitting a series of reference pulses; in a plurality of other frequency bands, transmitting pulses, with the phases of said pulses relative to the phases of the reference pulses encoding transmitted data; and, in a receiver, determining the phases of said pulses relative to the phases of the reference pulses, and decoding the transmitted data.

The designated reference frequency band may remain constant, or may change over time. More than one reference frequency band may be designated.
Fig. 1 is a block schematic diagram of a transmitter forming part of a radio communications system in accordance with the invention.
Fig. 2 is a block schematic diagram of a receiver in a system in accordance with the present invention.
Fig. 3 is a flow chart illustrating a method of operation of the system in accordance with the invention.

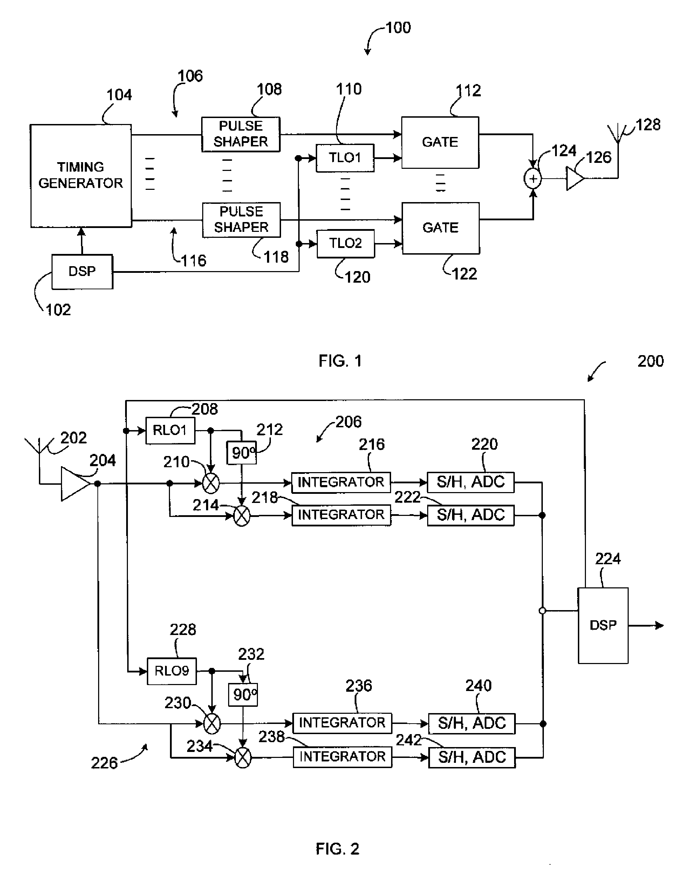

Figure 1 is a block schematic diagram of a transmitter 100, forming part of a wireless communications system. In particular, the invention is described herein with particular reference to its application in a multiband Ultra Wideband (UWB) wireless communications system. A definition of UWB systems is that a signal occupies a bandwidth of more than 500 MHz, in the band from 3.1 to 10.6 GHz. In one type of UWB system, the available bandwidth is divided into multiple individual bands. In this illustrated embodiment of the invention, there are nine such bands, although the exact number can be different in different implementations of the invention.

In the transmitter illustrated in Figure 1, the data which is to be transmitted is generated and/or processed in a digital signal processor (DSP) 102 of the transmitter 100. The data is then passed to a timing generator 104, where it is divided amongst the nine separate frequency bands. As illustrated in Figure 1, the transmission path 106 for the first band includes a pulse shaper 108, in which a pulse, or burst, is formed from the data being transmitted from the first transmission path 106. The first transmission path 106 further includes a first transmitter local oscillator (TLO1) 110, which generates a frequency in a first band of the total available bandwidth.

The pulse from the pulse shaper 108, and the first local oscillator signal from the local oscillator 110, are then supplied to a gate 112, in which the pulse, or burst, is used to modulate the local oscillator signal.

The other transmission paths operate in the same way, although in Figure 1 only the ninth transmission path 116 is shown, for simplicity. Thus, the data allocated for transmission in the ninth frequency band is passed to a pulse shaper 118, and the resulting pulse is combined with a local oscillator signal from a ninth transmitter local oscillator (TLO9) 120 in a gate 122, to form a signal at a frequency in the ninth band.

As is known, steps must be taken to ensure that the local oscillator frequencies TLO1-TLO9 meet the required conditions. That is, the phase and frequency differences between the local oscillator signals must be constant. For example, the local oscillator frequencies TLO1-TLO9 may all be obtained from just one standard local oscillator, with phase locked loops establishing the desired relationship between the local oscillator signals.

Further, in accordance with the present invention, the phases of the pulses generated by the pulse shapers 108, 118 are used to encode the data which is to be transmitted. More specifically, in this illustrated embodiment of the invention, the first band acts as a reference frequency band. The phase of each pulse transmitted in the other bands, relative to the phase of the pulse transmitted in the reference frequency band, is then used to encode the data which is to be transmitted.

For example, in the case of a binary coding scheme, a pulse having the same phase as the pulse transmitted in the reference frequency band may represent a binary '1', while a pulse having the opposite phase to the pulse transmitted in the reference frequency band may represent a binary'0.

Other, more complex, multi-phase coding schemes are also possible. For example, a coding scheme can define any number N of possible phase differences 2kπ/N, where k = 0, 1, ..., N-1, between the phase of each pulse transmitted in the other bands, relative to the phase of the pulse transmitted in the reference frequency band, with each of these phase differences encoding a different multi-bit binary value.

The signals generated by the gates in the nine transmission paths are then combined in an adder 124, and the resulting signal is amplified in a power amplifier 126, before being passed to a transmit antenna 128.

Figure 2 is a block schematic diagram showing the form of a receiver 200, adapted to receive signals transmitted from a transmitter 100 of the type shown in Figure 1.

Signals are received at an antenna 202, and then amplified in an amplifier 204. The resulting signal, containing components in all of the frequency bands, is then passed into nine reception paths, each of which detects the signals in a respective one of those frequency bands.

Thus, in a first reception path 206, a first receiver local oscillator (RL01) 208 generates a local oscillator signal at a frequency within the first band, and this local oscillator signal is passed to a first mixer 210, and is passed through a 90° phase shifter 212 to a second mixer 214. The mixers 210, 214 are connected to receive the received signal passed into the first reception path 206, and therefore detect the in-phase and quadrature components of that signal at the first local oscillator frequency. The in-phase and quadrature components are both detected, to avoid the possibility that the phase of the received signal is at 90° to the phase of the local oscillator signal, in which case the received signal may not be detected.

The outputs of the mixers 210, 214 are passed to respective integrators 216, 218, and the integrated outputs are passed to respective blocks 220, 222, which each perform a sample and hold function and an analog-digital conversion function. As a result of the high data rate which can be achieved in a UWB communications system, these blocks need to sample the signal at an appropriately high rate. For example, the sample period may need to be of the order of 100ps - 1ns.

The blocks 220, 222 therefore produce respective digital outputs representing the in-phase and quadrature components of the signal at the first local oscillator frequency. These signals are then passed to a digital signal processor 224. Together, the digital outputs representing the in-phase and quadrature components of the signal at the first local oscillator frequency are a suitable measure of the signal received at that frequency.

Again, the receiver 200 contains nine such reception paths, of which only the first and the ninth are shown in Figure 2 for the purposes of simplicity.

In the ninth reception path 226, the ninth receiver local oscillator (RL09) 228 generates a local oscillator signal at a frequency in the ninth frequency band, and this is passed to a corresponding first mixer 230, and through a 90° phase shifter 232 to a corresponding second mixer 234. As before, the outputs of the first and second mixers 230, 234 are passed to respective integrators 236, 238, and then to blocks 240, 242 which perform sample and hold and analog-digital conversion functions.

As in the first reception path 206, therefore, the blocks 240, 242 generate digital signals representing the in-phase and quadrature components of the signal in the ninth frequency band. Again, these digital signals are passed to the digital signal processor 224.

In order to ensure that the received signals are detected correctly, it is necessary that the local oscillators RLO1-RL09 in the receiver have frequencies, and phases, which are sufficiently close to the frequencies and phases of the local oscillators TLO1-TLO9 in the transmitter 100. Thus, as discussed above with reference to the generation of the local oscillator frequencies TLO1-TLO9 in the transmitter, steps must also be taken to ensure that the local oscillator frequencies RLO1-RLO9 meet these required conditions. As in the transmitter, for example, the local oscillator frequencies RLO1-RLO9 may all be obtained from just one standard local oscillator, with phase locked loops establishing the desired relationship between the local oscillator signals.

In accordance with this embodiment of the present invention, the detected information depends on the relative phases of the pulses received in the different frequency bands, and so the absolute values of the phases are less important.

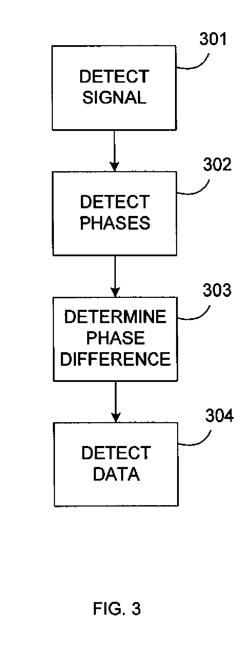

Figure 3 is a flow chart illustrating a presently preferred method of detecting the transmitted data in the receiver 200.

In step 301 of the process, received signals are detected in the frequency bands of the system. In this case, it is assumed that the first frequency band, detected in the first reception path 206, is acting as a reference band.

In step 302, the phases of the received signals in the different frequency bands are detected. As mentioned above, the blocks 220, 222, 240, 242 generate digital signals representing the in-phase and quadrature components of the signals in the respective frequency bands. These can then be used in the digital signal processing block 224 to detect the phase angles of the respective signals.

In step 303, these detected phase angles are compared. Specifically, the phase angles of the signals in the eight other frequency bands are compared to the phase angle of the signal in the reference frequency band, and eight phase difference values are obtained.

As described above, the transmitter uses these phase differences to encode data for transmission, and so the receiver can detect the transmitted data from the detected phase differences.

Thus, as described above, in the case of a binary coding scheme, a signal having the same phase as the signal transmitted in the reference frequency band may represent a binary '1', while a signal having the opposite phase to the signal transmitted in the reference frequency band may represent a binary '0.

Alternatively, in a more complex, multi-phase coding scheme, with N possible phase differences 2kπ/N, where k = 0,1, ..., N-1, between the phase of each signal, relative to the phase of the signal transmitted in the reference frequency band, each of these phase differences encodes a different multi-bit binary value.

Thus, in step 304, the receiver detects the binary value, represented by the detected phase difference, for each of the signals in the eight frequency bands other than the reference frequency band.

The invention is described herein with reference to an embodiment in which one of the frequency bands is designated as a reference band, and pulses can be transmitted in the other frequency bands with phases which have a specific relationship with the phases of the pulses in the reference band, such that this specific relationship encodes binary data to be transmitted.

The designated reference band may remain constant, or may change over time.

Thus, the system and method described herein allow the accurate detection of the transmitted data. The effect is that one of the frequency bands is unavailable for data transmission, since it is used as a phase reference. However, the arrangement has the advantage that the requirements imposed on the frequency generation are greatly reduced. That is, any moderate variation in the local oscillators within the transmitter can be compensated in the receiver. Further, there is a reduced requirement for absolute frequency accuracy in the local oscillators within the receiver.

In summary the invention relates to a wireless communications system, such as a multiband Ultra Wideband communications system in which data is transmitted by means of the phases of pulses in multiple frequency bands. One frequency band is designated as a reference frequency band, and data is encoded in the phase difference between pulses in the other frequency bands and pulses in the reference frequency band.

## Claims

1. A communications system, in which data is transmitted by means of pulses in multiple frequency bands, wherein one of said frequency bands is designated as a reference frequency band, and data is encoded in the phase of a pulse in another of said frequency bands relative to the phase of a pulse in said reference frequency band.

2. A communications system as claimed in claim 1, wherein data is encoded in the phase of pulses in each of said other frequency bands, relative to the phase of a pulse in said reference frequency band.

3. A communications system as claimed in claim 1, wherein a first binary value is encoded by transmitting a pulse having the same phase as a pulse in said reference frequency band, and a second binary value is encoded by transmitting a pulse having the opposite phase to a pulse in said reference frequency band.

4. A communications system as claimed in claim 1, wherein a plurality of phase differences are defined, and multi-bit binary values are encoded by transmitting pulses having respective phase differences, relative to a pulse in said reference frequency band.

5. A communications system as claimed in any preceding claim, wherein the designated reference band remains constant.

6. A communications system as claimed in any preceding claim, wherein the communications system is an Ultra Wideband wireless communications system.

7. A method of transmitting data in a multiband wireless communications system, the method comprising: designating a first frequency band as a reference frequency band, and transmitting pulses in said reference frequency band; and, in at least one other frequency band, transmitting pulses, with the phases of said pulses relative to the phases of said pulses transmitted in said reference frequency band encoding transmitted data.

8. A method as claimed in claim 7, comprising transmitting pulses, with the phases of said pulses relative to the phases of said pulses transmitted in said reference frequency band encoding transmitted data, in each available frequency band except the reference frequency band.

9. A method as claimed in claim 7 or 8, wherein a first binary value is encoded by transmitting a pulse having the same phase as a pulse in said reference frequency band, and a second binary value is encoded by transmitting a pulse having the opposite phase to a pulse in said reference frequency band.

10. A method as claimed in claim 7 or 8, wherein a plurality of phase differences are defined, and multi-bit binary values are encoded by transmitting pulses having respective phase differences, relative to a pulse in said reference frequency band.

11. A method as claimed in one of claims 7-10, wherein the designated reference band remains constant.

12. A method as claimed in one of claims 7-11, wherein the communications system is an Ultra Wideband wireless communications system.

13. A method of receiving transmitted data, the method comprising determining the phases of pulses received in at least one frequency band, relative to the phases of pulses received in a reference frequency band; and decoding transmitted data on the basis of the relative phases.

14. A method as claimed in claim 13, wherein the communications system is an Ultra Wideband wireless communications system.

15. A transmitter, for use in a multiband wireless communications system, the transmitter comprising:
frequency generators, for generating signals at a plurality of frequencies in respective frequency bands;
a plurality of modulators, for generating modulated pulses at said plurality of frequencies;
wherein one of said frequency bands is designated as a reference frequency band, and wherein said plurality of modulators are adapted to generate modulated pulses, such that the phase of a pulse at a first of said plurality of frequencies, relative to the phase of a pulse a reference frequency, is determined by data to be transmitted.

16. A transmitter as claimed in claim 15, wherein said frequency generators comprise a single local oscillator reference frequency generator, and means for generating said signals at said plurality of frequencies in respective frequency bands therefrom.

17. A receiver, for use in a multiband wireless communications system, the receiver comprising:
frequency generators, for generating signals at a plurality of frequencies in respective frequency bands;
means for detecting phases of pulses transmitted at said plurality of frequencies, wherein said means for detecting phases is adapted to determine phase differences, between the phases of signals at others of said plurality of frequencies and the phases of signals at a reference frequency; and
means for decoding transmitted data from said determined phase differences.

18. A receiver as claimed in claim 17, wherein said frequency generators comprise a single local oscillator reference frequency generator, and means for generating said signals at said plurality of frequencies in respective frequency bands therefrom.
